# EUROPEAN PATENT APPLICATION

(11) **EP 4 564 754 A1**
(43) Date of publication of application: **04.06.2025**
(21) Application number: 22952331.1
(22) Date of filing: 27.07.2022
(51) Int. Cl.: H04L 27/00

(54) **KEY GENERATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/108287
(87) International publication number: WO 2024/020868

(57) **Abstract**

Embodiments of the present disclosure provide a key generation method and apparatus, a communication device, and a storage medium. The key generation method executed by a first UE may comprise: generating a first root key according to a long-term credential; generating a second root key of a target function according to the first root key; and generating a session key according to the second root key, wherein the session key is used for control signaling transmission of the target function.

## Description

### TECHNICAL FIELD

The present disclosure relates to, but is not limited to, the field of wireless communication technology, and in particular relates to a key generation method and apparatus, a communication device, and a storage medium.

### BACKGROUND

With the development of technology, a sidelink (SL) based on a PC5 interface may carry out many types of services. An SR5 interface is further proposed on the PC5 interface.

Exemplarily, an SL-based service may include a proximity based service (ProSe) and a vehicle to everything (V2X) service. In addition, the SL-based service may further include a ranging/sidelink positioning function (SPRF) service, etc.

Prior to execution of these services, control signaling interaction of a control plane may be performed via the PC5 interface or the SR5 interface.

### SUMMARY

Embodiments of the present disclosure provide a key generation method and apparatus, a communication device, and a storage medium.

The embodiments in a first aspect of the present disclosure provide a key generation method, performed by a first user equipment (UE), where the method includes:
generating a first root key based on a long term credential;
generating, based on the first root key, a second root key of a target function; and
generating a session key based on the second root key, where the session key is used for control signaling transmission of the target function.

The embodiments in a second aspect of the present disclosure provide a key generation apparatus, where the apparatus includes:
a first generating module, configured to generate a first root key based on a long term credential;
a second generating module, configured to generate, based on the first root key, a second root key of a target function; and
a third generating module, configured to generate a session key based on the second root key, where the session key is used for control signaling transmission of the target function.

The embodiments in a third aspect of the present disclosure provide a communication device that includes a processor, a transceiver, a memory, and an executable program stored in the memory and capable of being executed by the processor, where the processor, when executing the executable program, performs the key generation method as provided in the aforementioned first aspect.

The embodiments in a fourth aspect of the present disclosure provide a computer storage medium. The computer storage medium stores an executable program. The executable program, when executed by a processor, is capable of implementing the key generation method as provided in the aforementioned first aspect.

In the technical solutions provided in the embodiments of the present disclosure, after the first root key is generated based on the long term credential, the second root key is generated for the target function based on the first root key, and the session key for the target function to perform control signaling interaction is further generated based on the second root key. In this way, key isolation for the control signaling interaction of different functions can be achieved, which improves the security of the control signaling.

It should be understood that the above general description and the later detailed description are only exemplary and explanatory, and do not limit the embodiments of the present disclosure.

### BRIEF DESCRIPTION OF THE DRAWINGS

The accompanying drawings herein are incorporated into and form a part of the specification, illustrate embodiments that are consistent with the present invention, and are used with the specification to explain principles of the embodiments of the present invention.
FIG. 1 is a schematic diagram of a structure of a wireless communication system illustrated according to an exemplary embodiment;
FIG. 2 is a flowchart of a key generation method illustrated according to an exemplary embodiment;
FIG. 3A is a flowchart of a key generation method illustrated according to an exemplary embodiment;
FIG. 3B is a flowchart of a key generation method illustrated according to an exemplary embodiment;
FIG. 4 is a flowchart of a key generation method illustrated according to an exemplary embodiment;
FIG. 5 is a schematic diagram of hierarchical communication between UEs illustrated according to an exemplary embodiment;
FIG. 6 is a schematic hierarchical diagram of a service illustrated according to an exemplary embodiment;
FIG. 7 is a schematic diagram of a key hierarchical architecture illustrated according to an exemplary embodiment;
FIG. 8 is a schematic diagram of a structure of an information processing apparatus illustrated according to an exemplary embodiment;
FIG. 9 is a schematic diagram of a structure of a UE illustrated according to an exemplary embodiment.

### DETAILED DESCRIPTION

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present invention. On the contrary, they are only examples of devices and methods consistent with some aspects of the embodiments of the present invention.

The terms used in the embodiments of the present disclosure are used solely for the purpose of describing particular embodiments, but are not intended to limit the embodiments of the present disclosure. The singular forms of "a", "the" and "said" used in the present disclosure are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" as used herein may be interpreted as "at the time of......", "when ......", or "in response to determining".

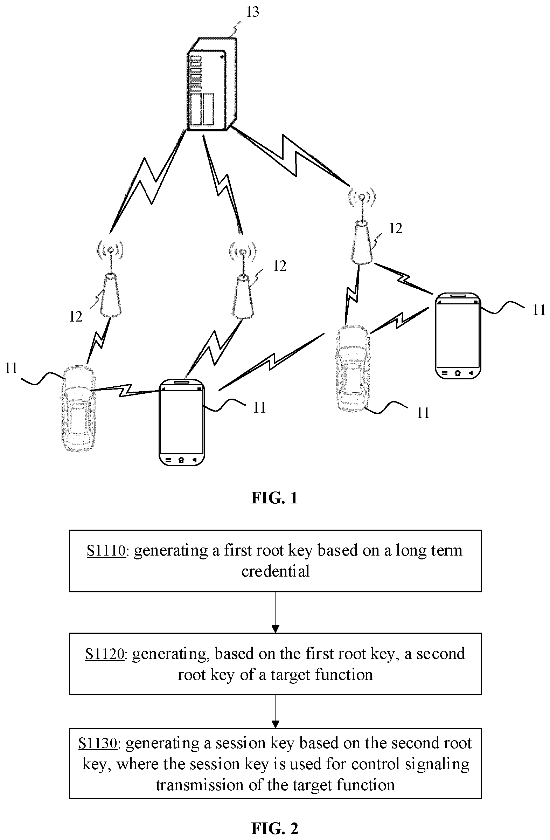

Referring to FIG. 1, a schematic diagram of a structure of a wireless communication system provided in an embodiment of the present disclosure is shown. As shown in FIG. 1, the wireless communication system is a communication system based on the cellular mobile communication technology, and the wireless communication system may include one or more UEs 11, and one or more access devices 12.

In some embodiments, the UE 11 may refer to a device that provides voice and/or data connectivity to a user. The UE 11 may communicate with one or more core networks via a radio access network (RAN). The UE 11 may be an IoT (Internet of things) UE, such as a sensor device, a mobile phone (or referred to as a "cellular" phone), or a computer with an IoT UE. For example, the UE 11 may be a fixed, portable, pocket, handheld, computer built-in, or vehicle-mounted device. For example, the UE 11 may be a station (STA), a subscriber unit, a subscriber station, a mobile station, a mobile, a remote station, an access point, a remote UE (remote terminal), an access UE (access terminal), a user terminal, a user agent, a user device, or a user equipment (UE). Or, the UE 11 may be a device of an unmanned aerial vehicle. Or, the UE 11 may be a vehicle-mounted device, such as a trip computer with wireless communication functions, or a wireless communication device externally connected to a trip computer. Or, the UE 11 may be a road side device, such as a street light, a signal light, or other road side devices with wireless communication functions.

The access device 12 may be a network side device in the wireless communication system. In some embodiments, the wireless communication system may be the 4th generation mobile communication (4G) system, also referred to as the long term evolution (LTE) system. Or, the wireless communication system may be a 5G system, also referred to as a new radio (NR) system or a 5G NR system. Or, the wireless communication system may be a next generation system of the 5G system. In some embodiments, the access network in the 5G system may be referred to as a new generation-radio access network (NG-RAN). Or, a MTC system.

In some embodiments, the access device 12 may be an evolved access device (eNB) used in a 4G system. Or, the access device 12 may be an access device (gNB) with a centralized distributed architecture in a 5G system. When adopting the centralized distributed architecture, the access device 12 typically includes a central unit (CU) and at least two distributed units (DUs). The central unit is provided with a protocol stack of a packet data convergence protocol (PDCP) layer, a radio link control (RLC) layer, and a media access control (MAC) layer. The distributed unit is provided with a protocol stack of a physical (PHY) layer. The embodiments of the present disclosure do not limit the specific implementations of the access device 12.

A wireless connection may be established between the access device 12 and the UE 11 via a wireless air interface. In a different embodiment, the wireless air interface is a wireless air interface based on a 4G standard. Or, the wireless air interface is a wireless air interface based on a 5G standard, for example, the wireless air interface is a new air interface. Or, the wireless air interface may also be a wireless air interface based on a next generation mobile communication network technology standard of the 5G.

As shown in FIG. 2, the embodiments of the present disclosure provide a key generation method performed by a first UE, where the method includes steps S1110 to S1130.

At S1110, a first root key is generated based on a long term credential.

At S1120, a second root key of a target function is generated based on the first root key.

At S1130, a session key is generated based on the second root key, where the session key is used for control signaling transmission of the target function.

The first UE may be any UE that performs relevant services based on an SL. For example, the first UE may establish, based on a PC5 interface or an SR interface, the SL with a second UE, and perform relevant services based on the SL. Herein, the first UE and the second UE may perform interaction of various services based on the unicast link of the SL.

The first UE and the second UE are mutually opposite end UEs. Herein, the first UE may be a source UE or a target UE for SL communication based on the PC5 interface or the SR5 interface. If the first UE is a source UE, the second UE is a target UE; and if the first UE is a target UE, the second UE is a source UE.

For example, the service for interaction between the first UE and the target UE may include a ProSe, a V2X service, and a ranging/sidelink positioning service.

The long term credential may be a pre-configured credential of the UE at the factory, a credential issued by a service provider, or a credential issued by a third party organization.

For example, the long term credential may be provided with a security root. The security root may be used for deriving or generating the first root key.

In some embodiments, different services may have different long term credentials, such that first root keys obtained for different services based on their respective corresponding long term credentials are different.

In other embodiments, different services may have the same long term credential, and different services may derive (i.e., generate) different first root keys based on their own service codes and the same long term credential.

After the first root key is obtained, the second root key of the target function used prior to the service interaction is further generated. The second root key may be used for generating the session key for the control signaling transmission of the target function.

For example, the session key includes:
a confidentiality protection key used for encryption of the control signaling of the target function; and/or
an integrity protection key used for integrity protection of the control signaling of the target function.

In this way, different session keys can be generated for the control signaling of different target functions, achieving the security isolation of the control signaling session, and enhancing the security of the communication based on the PC5 interface and/or the SR5 interface.

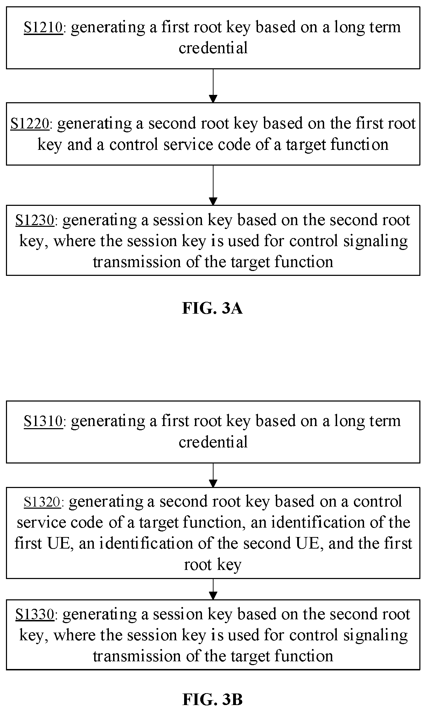

As shown in FIG. 3A, the embodiments of the present disclosure provide a key generation method performed by a first UE, where the method includes steps S1210 to S1230.

At S1210, a first root key is generated based on a long term credential.

At S1220, a second root key is generated based on the first root key and a control service code of a target function.

At S1230, a session key is generated based on the second root key, where the session key is used for control signaling transmission of the target function.

Different target functions may have different control service codes (CSCs). For example, the CSC may be an SCS corresponding to the SR5 interface.

For example, the target function may include at least one of the following:
a device and service discovery function (device & service discovery function, DSDF);
a group support service function (GSSF); and
a sidelink positioning and ranging function (sidelink positioning & ranging function, SPRF).

Different target functions may have different CSCs. As a result, even if the first root keys are the same, different second root keys are generated based on the same first root keys. In this way, the isolation of the second root keys of different functions is achieved. If the second root keys are different, the generated session keys are naturally different, achieving the key isolation for the control signaling of different functions, and enhancing the security of the control signaling interaction.

For example, generating the second root key based on the first root key and the control service code of the target function includes:
generating the second root key based on the first root key, a key identification of the first root key, a length of the key identification of the first root key, the control service code, and a length of the control service code.

The first root key itself, the length of the first root key, the control service code itself, and the length of the control service code are used as input parameters to a calculation formula, and the second root key is obtained after the calculation.

In another embodiment, generating the second root key may include:
generating the second root key based on an identification of the first UE, an identification of the second UE, and the first root key.

For example, generating the second root key based on the identification of the first UE, the identification of the second UE, and the first root key includes:
obtaining a preset parameter by performing bitwise exclusive or (XOR) on the identification of the first UE, and the identification of the second UE; and
generating the second root key based on the preset parameter, a length of the preset parameter, and the first root key.

Obtaining the preset parameter by performing the bitwise XOR on the identification of the first UE, and the identification of the second UE includes:
writing the identification of the first UE and the identification of the second UE in binary respectively; and
obtaining, based on the two binary identifications of the identification of the first UE and the identification of the second UE, the preset parameter by performing the bitwise XOR on the identification of the first UE, and the identification of the second UE.

In other embodiments, as shown in FIG. 3B, the embodiments of the present disclosure provide a key generation method performed by a first UE, where the method includes steps S1310 to S1330.

At S1310, a first root key is generated based on a long term credential.

At S1320, a second root key is generated based on a control service code of a target function, an identification of the first UE, an identification of the second UE, and the first root key.

At S1330, a session key is generated based on the second root key, where the session key is used for control signaling transmission of the target function.

In the embodiments of the present disclosure, the second UE is an opposite end UE that performs communication with the first UE based on the PC5 interface or the SR5 interface. In the embodiments of the present disclosure, in generating the second root key, the generation may be performed based on the identification of the second UE and the first root key.

For example, the S1320 may include: generating the second root key based on the control service code of the target function, the identification of the first UE, the identification of the second UE, and the first root key includes:
generating the second root key based on the control service code of the target function, a layer-2 identification of the first UE, a layer-2 identification of the second UE, and the first root key.

In the embodiments of the present disclosure, the identification of the UE is a layer-2 identification of the second UE, and the layer-2 identification includes, but is not limited to, a media access control (MAC) layer identification and/or a radio link control (RLC) layer identification.

The layer-2 identification is an identification that the first UE and the second UE interact with each other as soon as they discover each other on the SL. As a result, there is no need to perform additional interaction on the parameter for generating the second root key, thus featuring simplicity for implementation.

In some embodiments, generating the second root key based on the control service code of the target function, the layer-2 identification of the first UE, the layer-2 identification of the second UE, and the first root key includes:
obtaining a preset parameter by performing bitwise XOR on the layer-2 identification of the first UE, and the layer-2 identification of the second UE; and
generating the second root key based on the first root key, the control service code, a length of the control service code, the preset parameter, and a length of the preset parameter.

The identification pair formed by the layer-2 identification of the first UE and the layer-2 identification of the second UE is unique, and the parameter obtained through calculating based on the bitwise XOR on the layer-2 identification of the first UE and the layer-2 identification of the second UE is the same as the parameter obtained through calculating based on the bitwise XOR on the layer-2 identification of the second UE and the layer-2 identification of the first UE, ensuring that the preset parameters obtained through calculating based on the bitwise XOR on the first UE and the second UE respectively are the same.

Based on the control service code and the preset parameter, the first UE and the second UE may independently generate second root keys that are symmetrical to each other respectively.

In conclusion, there are various ways to generate the second root key based on the layer-2 identification of the first UE, the layer-2 identification of the second UE, and the first root key, and the specific implementation is not limited to the above examples.

In some embodiments, generating the first root key based on the long term credential includes:
generating, based on the long term credential, the first root key of a ranging/sidelink positioning service.

The session key provided in the embodiments of the present disclosure may be used for the generation of a session key for a specific service. For example, the specific service in the embodiments of the present disclosure includes, but is not limited to, a ranging/sidelink positioning service.

In some embodiments, the specific service may also include, but is not limited to, a Prose service, etc.

In the embodiments of the present disclosure, the first root key is generated based on the long term credential and the specified manner of the service.

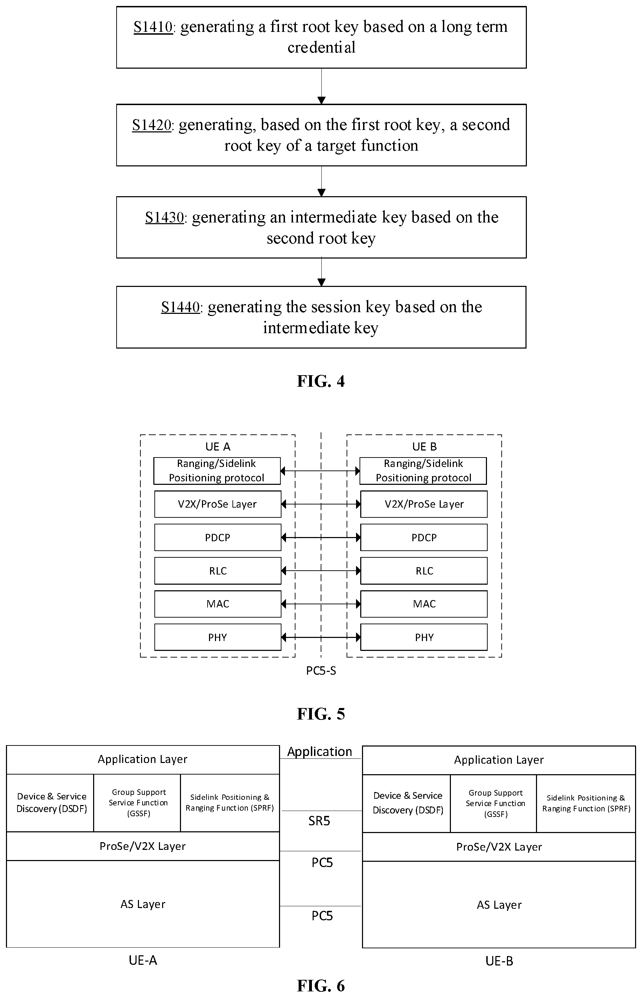

As shown in FIG. 4, the embodiments of the present disclosure provide a key generation method performed by a first UE, where the method includes steps S1410 to S1440.

At S1410, a first root key is generated based on a long term credential.

At S1420, a second root key of a target function is generated based on the first root key.

At S1430, an intermediate key is generated based on the second root key.

At S1440, a session key is generated based on the intermediate key.

In some embodiments, the session key includes:
a confidentiality protection key used for encryption of the control signaling; and/or
an integrity protection key used for integrity protection of the control signaling.

Firstly, convert the second root key into an intermediate key. Then, the session key is generated based on the intermediate key.

The confidentiality protection key and the integrity protection key in the session key may be generated by using different calculation formulas and different parameters, or may be generated by using the same calculation formula but introducing a different parameter.

In some embodiments, generating the intermediate key based on the second root key includes:
generating a first random number;
receiving a second random number generated by the second UE; and
generating the intermediate key based on the first random number, the second random number, and the second root key.

For example, generating the intermediate key based on the first random number, the second random number, and the second root key includes:
generating the intermediate key based on the first random number itself, a length of the first random number, the second random number itself, a length of the second random number, and the second root key.

In some embodiments, generating the session key based on the intermediate key includes:
determining an algorithm identification of a security algorithm for the first UE and the second UE to perform control signaling transmission protection; and
generating the session key based on the algorithm identification and the intermediate key.

The security algorithm may be a security algorithm supported by both the first UE and the second UE.

For example, the security algorithm of the confidentiality protection key and the security algorithm of the integrity protection key may be the same or different.

For example, generating the session key based on the algorithm identification and the intermediate key may include:
generating the integrity protection key based on an algorithm identification of the integrity protection algorithm and the intermediate key; and/or
generating the confidentiality protection key based on the algorithm identification of the confidentiality protection algorithm and the intermediate key.

In some embodiments, assuming that the first UE is a source UE, the method may include:
sending a direct communication request (DCR) to the second UE, where the DCR includes a credential identification of the long term credential, and security capability information of the first UE; and the security capability information of the first UE may indicate a security algorithm supported by the first UE and the first random number;
receiving a direct connection security mode command returned by the second UE based on the DCR, where the direct connection security mode command includes the second random number generated by the second UE;
generating the first root key;
generating the second root key based on the first root key;
generating the intermediate key based on the second root key, the first random number, and the second random number; and
generating the session key based on the intermediate key.

In other embodiments, assuming the first UE is a target UE, the method may include:
receiving a DCR sent by the second UE, where the DCR includes a credential identification of the long term credential, and security capability information of the second UE; and the security capability information of the second UE may indicate a security algorithm supported by the first UE;
generating the first root key based on the long term credential;
generating the second root key based on the first root key;
generating the intermediate key based on the second root key, the second random number carried by the DCR, and the first random number generated by the first UE itself;
returning a direct connection security mode command to the second UE, where the direct connection security mode command includes the second random number; and
generating the session key at each of the first UE and the second UE in accordance with their own generated intermediate keys.

In some embodiments, the target function may include at least one of the following:
a DSDF;
a GSSF;
an SPRF.

For example, different session keys are generated for the above three functions, thereby achieving the key isolation of different functions, and enhancing the interaction security of the control signaling.

The current architecture used for supporting ranging/SL positioning may be shown in FIGS. 5 and 6. The ranging capability, auxiliary data, and position information are transmitted between UEs for the protocol of the ranging/SL positioning, and the SR5 interface is further proposed on the PC5 interface to support the ranging/SL positioning service (ranging/sidelink positioning protocol, SPRF).

One or more of the following processes may be included to achieve control of the ranging/SL positioning service:
a device discovery process of the ranging/SL positioning service;
a direct communication establishment process of the ranging/SL positioning service; and
an execution process of the ranging/SL positioning service.

In the device discovery process, the UEs to execute the ranging/SL positioning service discover each other, such that the first UE will discover the second UE, and the second UE will discover the first UE.

After the first UE and the second UE discover each other, a direct communication link may be established based on the PC5 interface and/or the SR5 interface through the direct communication establishment process.

After the link is established, the first UE and the second UE may perform the ranging/SL positioning service.

Key generation in the embodiments of the present disclosure may be performed in the direct communication establishment process.

In order to carry the SR5 signaling, a non-Internet protocol (IP) packet data convergence protocol (PDCP) service data unit (SDU) type is used at a user plane PC5 reference point. The SR5 signaling may be the signaling based on the SR5 interface transmission, i.e., a type of control signaling interacted between the first UE and the second UE as described above.

As shown in FIG. 5, UE A and UE B may include:
a PHY layer;
a MAC layer;
a RLC layer;
a PDCP layer;
a V2X/ProSe layer used for providing a V2X/Prose service; and
a ranging/SL positioning protocol layer used for providing the ranging SL service.

As shown in FIG. 6, in the UE A (i.e., UE-A) and UE B (i.e., UE-B), the layers below the V2X/ProSe layer are access (AS) layers.

Referring to FIG. 6, the SR5 interface corresponding to the ranging/SL positioning protocol (RSPP) layer has at least three control functions, namely the DSDF, the GSSF, and the SPRF.

Above the ranging/SL positioning protocol layer, an application (App) layer is further included.

Since the RSPP/SR5 is established on the PC5 direct communication protocol, the security protection of the direct communication of the RSPP/SR5 may rely on the security protection of the PC5 direct communication in the related technology. This means that the existing root key (e.g., established for the ProSe/V2X service) of the PC5 direct link may be reused for the ranging/SL positioning service between the same pair of UEs.

When there are a plurality of ranging/SL positioning services between UEs, these ranging/SL positioning services may share the same root key.

The security protection of the ranging/SL positioning service direct communication may reuse, as far as possible, the security mechanism that protects the ProSe PC5 unicast link. Since each service unit of the SR5 is processed as a ProSe application program of the PC5 unicast direct connection, the security protection of the SR5 signaling may multiplex the security protection mechanism of the PC5 unicast direct communication.

Since the control signaling of the ranging/SL positioning service is processed by the SR5 service unit, and the control signaling of the ranging/SL positioning service generally has a higher security requirement than the ordinary ProSe/ranging/SL application, it cannot be guaranteed that the security context generated by the ordinary ProSe service and ranging/SL positioning service is capable of satisfying the security requirement of the control signaling of the ranging/SL positioning service. Therefore, there is a need to guarantee the security isolation between the control signaling of the ranging/SL positioning service and the data traffic of the ranging/SL positioning service. The embodiments of the present disclosure aim to investigate the key isolation that supports the security protection of the ranging/SL positioning service.

The K_{NRP} is generated through an authentication and key establishment process based on the long term credential, and is provided to the UE as a security root of the PC5 unicast link.

For a UE that supports both the ProSe/V2X service and the ranging/SL positioning service, a same set of long term credentials may be used for both the ProSe/V2X service and the ranging/SL positioning service.

However, in order to achieve the security isolation between the ProSe/V2X service and the ranging/SL positioning service, the embodiments of the present disclosure propose that the authentication and key establishment method used in the ranging/SL positioning service should be different from the authentication and key establishment method used in the ProSe/V2X service. Through different authentication and key establishment methods, a K_{NRR} different from the root key K_{NRP} of the ProSe/V2X may be generated.

The K_{NRP} is the root key for the ranging/SL positioning, and the K_{NRR} is the root key for the ranging/SL positioning service.

The security activation of the PC5 unicast link relies on the security policy assignment of a specific Prose/V2X application. Therefore, a security policy should be assigned to each SR5 control service, which by default may be configured/set as follows:
for the signaling integrity protection, "required";
for the signaling confidentiality protection, there are three options, namely "required", "preferably required", or "not required";
for the user plane integrity protection, "required"; and
for the user plane confidentiality protection, there are three options, namely "required", "preferably required", or "not required".

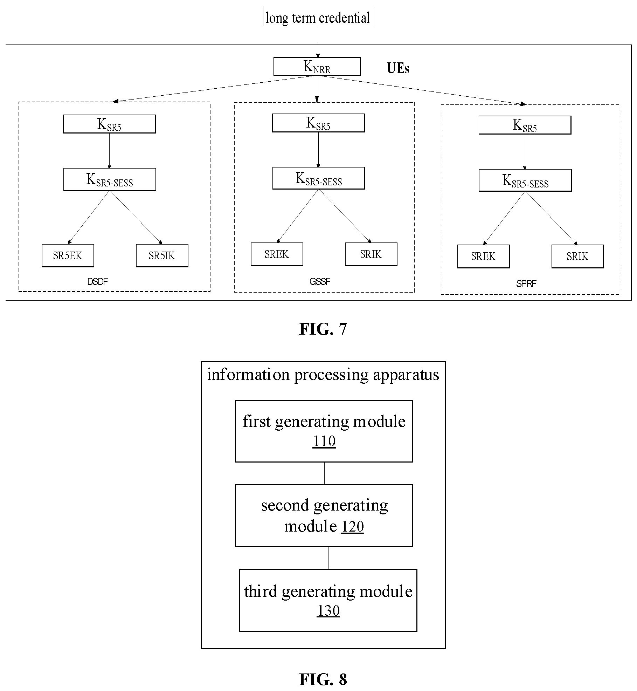

The key hierarchy structure of the ranging/SL positioning service direct communication may be shown in FIG. 7.

In order to isolate the security established for different ranging/SL positioning services, the root keys between a pair of UEs for different service types should be separated.

Based on the root key K_{NRR} of the ranging/SL service between a pair of UEs derived from the long term credential, a key hierarchy structure of the ranging/SL service direct communication is proposed.

K_{NRR}: a root key shared between UEs in performing the ranging/SL positioning communication by using the PC5 unicast link. The K_{NRR} is generated by running the authentication and key establishment process and using the long term credential. The long term credential may be a credential dedicated to the ranging/SL positioning service.

Assuming that the authentication and key establishment process is specific for each of different ranging/SL positioning services, different ranging/SL positioning services may have independent K_{NRR}. Since there may be cases where a plurality of UEs use the same ranging/SL positioning service, this means that the K_{NRR} may be shared between a plurality of UEs using the same ranging/SL positioning service, which means that the K_{NRR} is not associated with a specific pair of UEs, nor with a specific PC5 link.

Meanwhile, the K_{NRR} is identified by using a K_{NRR} ID, and the K_{NRR} may be generated by a pair of UEs by using a random ID assigned by the two parties. Since a plurality of PC5 links may be established between the same pair of UEs, this means that the K_{NRR} ID is associated with a specific pair of UEs, but not necessarily associated with a specific PC5 link. The K_{NRR} here is one of the aforementioned first root keys.

K_{SR5}: a root key shared between UEs. The UEs perform communication by using the PC5 unicast link, and carry the ranging/SL positioning service control signaling on the SR5 reference point. The K_{SR5} is generated based on the aforementioned K_{NRR}.

Since the K_{NRR} is shared between a plurality of UEs, in order to isolate this level of root key between different control functions in the SR5 layer, it is proposed to associate the K_{SR5} with a specific control function in the SR5 layer through a specific PC5 link, and to bind the generation of the K_{SR5} to a specific control function and a specific pair of UEs.

Meanwhile, the K_{SR5} is identified by using a K_{SR5} ID, and the K_{SR5} ID may be generated by the opposite end UEs, between the opposite end UEs, by using a random ID assigned by the two parties.

K_{SR-SESS}: a key derived by the UE from the K_{SR5}, and used for deriving the key that protects the ranging data transmission between UEs. The K_{SR-SESS} is the intermediate key.

The K_{SR-SESS} is identified by using a K_{SR5-SESS} ID.

SR5IK: an integrity protection key used for integrity protection of an integrity protection algorithm.

SR5EK: a confidentiality protection key used for confidentiality protection, i.e., for encryption.

Both SR5EK and SR5IK are generated based on the K_{SR5-SESS} and the corresponding algorithmic identification.

SR5IK is generated based on the K_{SR5-SESS} and the algorithmic identification of the integrity protection algorithm.

SR5EK is generated based on the K_{SR5-SESS} and the algorithmic identification of the confidentiality protection algorithm.

SR5EK and SR5IK are the aforementioned session keys.

The process of generating the K_{NRR} may be as follows.

The difference between the computation of the K_{NRR} and/or the generation of the root key K_{NRP} of the Prose/V2X service is that the long term credential of the ranging/SL positioning service is different from the long term credential of the ProSe/V2X service, and/or the authentication and key establishment method of the ranging/SL positioning service is different from the authentication and key establishment method of the ProSe/V2X service.

The process of generating the K_{SR5} may be as follows.

In calculating the K_{SR5} from the K_{NRR}, use the following parameters for inputting into the calculation formula:
fc = to be determined (TBD);
P0 = the control service code of the SR5, where the control service code may be, e.g., ProSe_AppID_DSDF, ProSe _AppID_GSSF, or ProSe _AppID_SPRF, etc;
L0 = the length of the control service code of the SR5;
P1 = K_{NRR} ID;
L1 = the length of the K_{NRR} ID;
generating the K_{SR5} by using the layer-2 ID of the first UE, the layer-2 ID of the second UE, and the control service code of the SR5.

For example, the parameters input to the calculation formula may be as follows:
fc = TBD;
P0 = the control service code of the SR5, where the control service code may be, e.g., ProSe_AppID_DSDF, ProSe _AppID_GSSF, or ProSe _AppID_SPRF, etc;
L0 = the length of the control service code of the SR5;
P1 = the layer-2 identification of the target UE ⊕ the layer-2 identification of the source UE;
L1 = the layer-2 identification of the target UE ⊕ the layer-2 identification of the source UE to obtain the length of the preset parameter;
the input key is the K_{NRR}.

The second UE here may be the target UE.

The control service code of the SR5 may be specific to different control functions of the ranging/SL positioning service. The K_{NRR} ID is specific to a specific first UE and second UE. As a result, the K_{SR5} derived based on the K_{NRR} is specific to the control service corresponding to the ranging/SL positioning service between a pair of UEs.

The generation of the K_{SR5-SESS} may be as follows.

The generation of the K_{SR5-SESS} may be referred to the generation of the K_{NRP-SESS} of the Prose/V2X service, with the difference that the input key is the K_{SR5}.

The generation of the SR5EK and SR5IK may be as follows.

The generation of the SR5EK and SR5IK may be referred to the generation manner of the NRPEK and NRPIK of the Prose/V2X service, with the difference that the input key is the K_{SR5-SESS}.

The UE shall be capable of generating a separate security context for each control service of the ranging/SL positioning, and the security context may include the K_{SR5}, the K_{SR5-SESS}, and the SR5IK and SRSEK.

The UE shall be capable of generating the K_{SR5} based on the K_{NRR}, the K_{NRR} ID, the control service code of the SR5, the layer-2 identification of the first UE, and the layer-2 identification of the second UE.

The UE may apply a default security policy to the control service of the SR5 on the PC5 link.

As shown in FIG. 8, the embodiments of the present disclosure provide a key generation apparatus, where the apparatus includes:
a first generating module 110, configured to generate a first root key based on a long term credential;
a second generating module 120, configured to generate, based on the first root key, a second root key of a target function; and
a third generating module 130, configured to generate a session key based on the second root key, where the session key is used for control signaling transmission of the target function.

In some embodiments, the first generating module 110, the second generating module 120 and the third generating module 130 may include program modules. The program module, when executed by a processor, is capable of implementing the operations described above.

In other embodiments, the first generating module 110, the second generating module 120 and the third generating module 130 may include hardware-software combination modules. The hardware-software combination module includes, but is not limited to, a programmable array. The programmable array includes, but is not limited to, a field programmable array and/or a complex programmable array.

In still other embodiments, the first generating module 110, the second generating module 120 and the third generating module 130 may include hardware-only modules. The hardware-only module includes, but is not limited to, a dedicated integrated circuit.

In some embodiments, the second generating module 120 is configured to generate the second root key based on the first root key and a control service code of the target function.

In some embodiments, the second generating module 120 is further configured to generate the second root key based on the control service code of the target function, an identification of a first UE, an identification of a second UE, and the first root key.

In some embodiments, the second generating module 120 is configured to generate the second root key based on the control service code of the target function, a layer-2 identification of the first UE, a layer-2 identification of the second UE, and the first root key.

In some embodiments, the second generating module 120 is configured to obtain a preset parameter by performing bitwise XOR on the layer-2 identification of the first UE and the layer-2 identification of the second UE, and generate the second root key based on the first root key, the control service code, a length of the control service code, the preset parameter, and a length of the preset parameter.

In some embodiments, the second generating module 120 is specifically configured to generate the second root key based on the first root key, a key identification of the first root key, a length of the key identification of the first root key, the control service code, and a length of the control service code.

In some embodiments, the first generating module 110 is configured to generate, based on the long term credential, the first root key of a ranging/SL positioning service.

In some embodiments, the third generating module 130 is configured to generate an intermediate key based on the second root key, and generate the session key based on the intermediate key.

In some embodiments, the third generating module 130 is configured to generate a first random number, receive a second random number generated by the second UE, and generate the intermediate key based on the first random number, the second random number, and the second root key.

In some embodiments, the third generating module 130 is configured to determine an algorithm identification of a security algorithm for the first UE and the second UE to perform control signaling transmission protection, and generate the session key based on the algorithm identification and the intermediate key.

In some embodiments, the target function may include at least one of the following:
a DSDF;
a GSSF; and
an SPRF.

The embodiments of the present disclosure provide a communication device, including:
a memory, configured to store an executable instruction of a processor; and
the processor, connected to the memory;
where the processor is configured to perform the key generation method provided in any of the foregoing technical solutions.

The processor may include various types of storage media, where the storage media are non-transitory computer storage media capable of continuing to memorize information stored thereon after the communication device is powered down.

Here, the communication device includes the first UE and/or the second UE.

The processor may be connected to the memory via a bus or the like for reading an executable program stored in the memory, e.g., the method shown in any one of FIGS. 2, 3A, 3B to 4.

The embodiments of the present disclosure provide a communication system, including a first UE and a second UE. For example, before the first UE needs to perform a service based on the PC5 interface or the SR5 interface, the first UE sends a service authorization request to a network device and receives a response returned by the network device based on the service authorization request, where the response includes a layer-2 identification of a target UE configured by the network device. The layer-2 identification of the first UE may be generated based on an application ID of a service to be transmitted. In this way, the source UE will be aware of both of the layer-2 identification of the source UE and the layer-2 identification of the target UE. The first UE and the second UE discover each other based on the broadcast channel of the SL, e.g., the source UE sends the layer-2 identification of the target UE on the broadcast channel, such that the UE around the source UE may perform responding when monitoring the network-configured layer-2 identification on the broadcast channel.

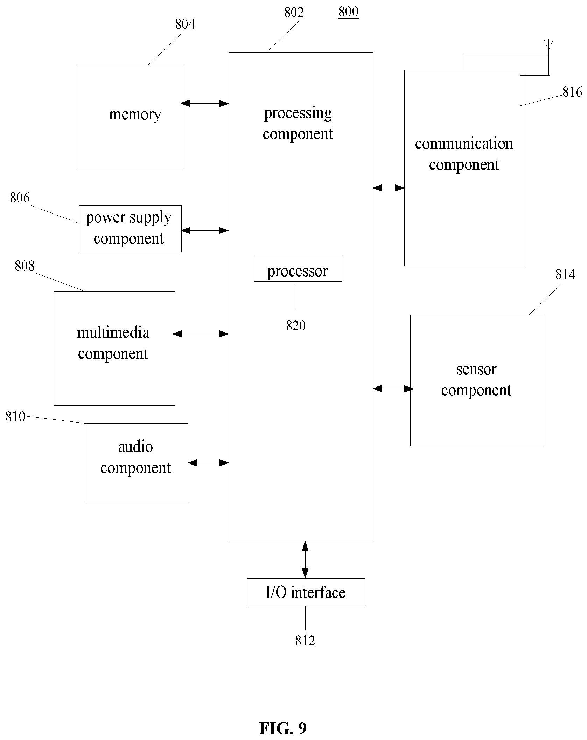

FIG. 9 is a block diagram of a UE 800 illustrated according to an exemplary embodiment. For example, the UE 800 may be a mobile phone, a computer, a digital broadcast user equipment, a message transceiver device, a game console, a tablet device, a medical device, a fitness device, or a personal digital assistant.

Referring to FIG. 9, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as operations associated with display, telephone calls, data communication, camera operations, and recording operations. The processing component 802 may include one or more processors 820 to execute an instruction to generate all or part of the steps of the method described above. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support the operations on the UE 800. Examples of such data include the following: an instruction of any application program or method operated on the UE 800, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 806 supplies power to various components of the UE 800. The power supply component 806 may include a power supply management system, one or more power supplies, and other components associated with generating, managing and distributing power for the UE 800.

The multimedia component 808 includes a screen that provides an output interface between the UE 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 808 includes a front-facing camera and/or a rear-facing camera. The front-facing camera and/or the rear-facing camera may receive external multimedia data when the UE 800 is in an operating mode, such as a shooting mode or a video mode. Each of the front-facing camera and the rear-facing camera may be a fixed optical lens system or have a focal length and optical zoom capability.

The audio component 810 is configured to output and/or input audio signals. For example, the audio component 810 includes a microphone (MIC), configured to receive external audio signals when the UE 800 is in an operating mode, such as a calling mode, a recording mode and a voice recognition mode. The received audio signals may be further stored in the memory 804 or sent via the communication component 816. In some embodiments, the audio component 810 further includes a speaker for outputting the audio signals.

The I/O interface 812 provides an interface between the processing component 802 and a peripheral interface module, and the peripheral interface module may be a keypad, a click wheel, a button, etc. These buttons may include, but are not limited to, a home button, a volume button, a start button, and a lock button.

The sensor component 814 includes one or more sensors configured to provide status assessment of various aspects of the UE 800. For example, the sensor component 814 may detect an open/closed state of the device 800, relative positioning of the components, for example, the components are the display and small keypad of the UE 800. The sensor component 814 may also detect a change in the position of the UE 800 or a change in the position of one component of the UE 800, the presence or absence of contact between the user and the UE 800, the orientation or acceleration/deceleration of UE 800, and temperature changes of the UE 800. The sensor component 814 may include a proximity sensor that is configured to detect the presence of nearby objects in the absence of any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate the communication between the UE 800 and other devices in wired or wireless manners. The UE 800 may access a wireless network based on a communication standard, such as WiFi, 2G, 3G, 4G, 5G, new generation wireless network, or a combination thereof. In an exemplary embodiment, the communication component 816 receives broadcast signals or broadcast related information from an external broadcast management system via a broadcast channel. In an exemplary embodiment, the communication component 816 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, or other technologies.

In an exemplary embodiment, the UE 800 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

The embodiments of the present disclosure provide a computer storage medium. The computer storage medium stores an executable program. The executable program, when executed by a processor, is capable of implementing the key generation method provided in any of the foregoing technical solutions. For example, the executable program, when executed by the processor, is capable of implementing the key generation method provided in any one of FIGS. 2, 3A, 3B to 4.

The computer storage medium may be a non-instantaneous storage medium, or a non-transitory computer-readable storage medium.

In an exemplary embodiment, a non-transitory computer-readable storage medium including an instruction is provided, such as the memory 804 including an instruction. The instruction described above is capable of being executed by the processor 820 of the UE 800 to generate the method described above. For example, the non-transitory computer-readable storage medium may be an ROM, a random access memory (RAM), a CD-ROM, a magnetic tape, a floppy disk, or an optical data storage device.

After considering the specification and practicing the invention disclosed herein, those skilled in the art will easily come up with other implementation solutions of the present invention. The present disclosure is intended to cover any variations, uses or adaptive changes of the present invention, and the variations, uses or adaptive changes follow the general principles of the present invention and include common knowledge or commonly used technical means in the technical field that is not disclosed in the present disclosure. The specification and embodiments are only considered to be exemplary, and the true scope and spirit of the present invention are indicated by the following claims.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. A key generation method, performed by a first user equipment (UE), wherein the method comprises:
generating a first root key based on a long term credential;
generating, based on the first root key, a second root key of a target function; and
generating a session key based on the second root key, wherein the session key is used for control signaling transmission of the target function.

2. The method according to claim 1, wherein the generating, based on the first root key, the second root key of the target function comprises:
generating the second root key based on the first root key and a control service code of the target function.

3. The method according to claim 2, wherein the generating the second root key based on the first root key and the control service code of the target function comprises:
generating the second root key based on the control service code of the target function, an identification of the first UE, an identification of a second UE, and the first root key.

4. The method according to claim 3, wherein the second UE is an opposite end UE of the first UE.

5. The method according to claim 3, wherein the generating the second root key based on the control service code of the target function, the identification of the first UE, the identification of the second UE, and the first root key comprises:
generating the second root key based on the control service code of the target function, a layer-2 identification of the first UE, a layer-2 identification of the second UE, and the first root key.

6. The method according to claim 5, wherein the generating the second root key based on the control service code of the target function, the layer-2 identification of the first UE, the layer-2 identification of the second UE, and the first root key comprises:
obtaining a preset parameter by performing bitwise exclusive or (XOR) on the layer-2 identification of the first UE, and the layer-2 identification of the second UE; and
generating the second root key based on the first root key, the control service code, a length of the control service code, the preset parameter, and a length of the preset parameter.

7. The method according to claim 2, wherein the generating the second root key based on the first root key and the control service code of the target function comprises:
generating the second root key based on the first root key, a key identification of the first root key, a length of the key identification of the first root key, the control service code, and a length of the control service code.

8. The method according to any one of claims 1 to 7, wherein the generating the first root key based on the long term credential comprises:
generating, based on the long term credential, the first root key of a ranging/sidelink positioning service.

9. The method according to any one of claims 1 to 8, wherein the generating the session key based on the second root key comprises;
generating an intermediate key based on the second root key; and
generating the session key based on the intermediate key.

10. The method according to any one of claims 1 to 9, wherein the generating the intermediate key based on the second root key comprises:
generating a first random number;
receiving a second random number generated by a second UE; and
generating the intermediate key based on the first random number, the second random number, and the second root key.

11. The method according to any one of claims 1 to 10, wherein the generating the session key based on the intermediate key comprises:
determining an algorithm identification of a security algorithm for the first UE and a second UE to perform control signaling transmission protection; and
generating the session key based on the algorithm identification and the intermediate key.

12. The method according to any one of claims 1 to 11, wherein the target function may comprise at least one of:
a device and service discovery function (DSDF);
a group support service function (GSSF); and
a sidelink positioning and ranging function (SPRF).

13. A key generation apparatus, wherein the apparatus comprises:
a first generating module, configured to generate a first root key based on a long term credential;
a second generating module, configured to generate, based on the first root key, a second root key of a target function; and
a third generating module, configured to generate a session key based on the second root key, wherein the session key is used for control signaling transmission of the target function.

14. A communication device, comprising: a processor, a transceiver, a memory, and an executable program stored in the memory and capable of being executed by the processor, wherein the processor, when executing the executable program, performs the method provided in any one of claims 1 to 12.

15. A computer storage medium, wherein the computer storage medium stores an executable program; and the executable program, when executed by a processor, is capable of implementing the method provided in any one of claims 1 to 12.
